# EUROPEAN PATENT APPLICATION

(11) **EP 4 717 677 A1**
(43) Date of publication of application: **01.04.2026**
(21) Application number: 24858818.8
(22) Date of filing: 25.07.2024
(51) Int. Cl.: C02F 1/46

(54) **REACTOR DEVICE FOR TREATING WATER**

(30) Priority: 30.08.2023 ES 202330719
(71) Applicant: Universidad de Jaén, 23071 Jaén (ES)
(72) Inventor: VELO GALA, Inmaculada, 23071 Jaén Jaén (ES); BOLAÑOS JIMÉNEZ, María Rocío, 23071 Jaén (ES); ARAGÓN BUITRAGO, Arturo, 23071 Jaén (ES); FERNÁNDEZ POYATOS, María del Pilar, 23071 Jaén (ES); LÓPEZ RAMÓN, María Victoria, 23071 Jaén (ES); ÁLVAREZ MERINO, Miguel Ángel, 23071 Jaén (ES)
(74) Representative: Clarke, Modet y Cía., S.L.
(86) International application number: PCT/ES2024/070480
(87) International publication number: WO 2025/046155

(57) **Abstract**

Reactor device (2) for treating water (1) comprising at least one electrochemical cell (3) with a first part (4) comprising a first cavity (41) with at least one inner channel (42), where the inner channel (42) has a path (42a) with at least one backwater chamber (42c) for water flow (1) in the form of a divergent-convergent nozzle. Associated system comprising said reactor device (2). It seeks to improve the efficiency of water availability (1) and help conserve the environment, avoiding pollution, reducing the volume consumed and mitigating the impact of climate change.

## Description

### OBJECT OF THE INVENTION

The present patent application aims to a reactor device for treating water comprising an electrochemical cell with a first part with a first cavity with at least one inner channel, where the inner channel has a path with at least one water flow backwater chamber, incorporating notable innovations and advantages.

### BACKGROUND OF THE INVENTION

It has been observed that the composition of wastewater is changing along with the society's production and consumption activities. Biological treatments of urban wastewater are not adapted to the elimination of new recalcitrant chemical pollutants they receive, to which is added the existing water shortage worldwide.

Today, various methodologies are known in the state of the art aimed at alleviating the aforementioned problem, such as: a) Adsorption processes in porous materials in which the chemical contaminants of water are removed by adsorption on the surface of these materials; b) Water disinfection and/or removal of organic contaminants by direct photolysis or advanced oxidation processes; c) Membrane filtration that separates the contaminants from the water; d) Coagulation-flocculation.

However, these water treatment techniques have drawbacks such as the transfer of water contaminants to a solid medium in the adsorption process, or their concentration as permeate in membrane filtration, or sludge generation in coagulation-flocculation, generating other more polluting waste that must be treated, thus causing an increase in process cost. In addition, certain treatments require the chemical oxidant addition, which in addition to being dependent on this oxidizing compound, react with organic matter, generating undesirable disinfection byproducts due to their high toxicity.

It is also worth mentioning, by way of illustration, the case of hospitals, as large producers of wastewater with high concentrations of drugs of a very diverse nature and very common use (antibiotics, contrast media, anti-carcinogens, analgesics, etc.) that are dumped directly into the urban wastewater collector until they reach the treatment plant where conventional systems are not enabled for disposal. As a result, the waters at the exit of the urban wastewater treatment plant are discharged into the environment with huge concentrations and types of pollutants that have been detected even in tap water. Faced with this situation, in addition to the environmental damage caused by water pollution in ecosystems, its reuse is considered a very difficult option to achieve.

It is also known from the state of the art, as described in WO2009143629, a method for decontaminating wastes containing toxic organic molecules and for degrading them. This method comprises the use of a surfactant to form micelles that trap the toxic organic molecules present in the waste. Then, the waste is decontaminated by extracting an aqueous solution comprising the micelles. Subsequently an electrolytic cell is filled with the aqueous solution, the electrolytic cell comprising at least one pair of electrodes; and applying to said at least one pair of electrodes a current for a period of time suitable to electro-oxidize said toxic organic molecules. A cylindrical electrolytic cell that can be used to carry out this method is also disclosed. The electrolytic cell comprises cylindrical electrodes and a tubular weir that allows an even distribution of the electrolyte to the electrodes. The method and electrolytic cell of the invention allows the decontamination of waste from the aluminum industry containing creosote, oil and grease.

In view of the above, however, there is a need to improve the efficiency of water availability and help conserve the environment, avoiding pollution, reducing the volume consumed and mitigating the impact that climate change generates with water shortages. Thus, it is desirable to obtain a simple and economical wastewater treatment system that allows its safe reuse, applicable as a tertiary treatment system for wastewater, understanding as tertiary systems the additional processes necessary to reduce the polluting load of the water so that it can be reused.

### DESCRIPTION OF THE INVENTION

As mentioned, as water shortages increase, motivated both by the pollution of ecosystems and by the decrease in rainfall due to climate change, the need to apply new viable systems that guarantee safe access to an essential resource for life such as water also increases exponentially. The application of advanced electrochemical oxidation processes has been determined as a promising strategy to develop viable technologies that ensure both the disinfection of water for consumption and sanitation, as well as the safe reuse of wastewater.

The electrochemical systems applied to water treatments act simultaneously both in the mineralization of chemical contaminants and in the inactivation of pathogens, by generating oxidation-reduction reactions where water is the only reagent used in the treatment. The electrodes can react by direct contact electrolysis on the molecules of organic compounds and microorganisms, as well as produce oxidizing radicals that will be responsible for the inactivation of pathogens through damage to DNA, lipids and cell wall proteins, while oxidizing chemical contaminants until they are removed from the water.

The proposed electrochemical system is of great interest for water disinfection, decontamination of wastewater in industries, hospitals and those from urban wastewater treatment plants. With regard to water purification, it is of great interest for the disinfection processes carried out by the public administration because the proposed reactor dispenses with the addition of chemical oxidants, which eliminates the risk of production of disinfection byproducts such as those generated in the chlorination and ozonation processes. In addition, it is an alternative to the application of UV-C radiation with Hg lamps which are being withdrawn from the market for being a highly polluting waste after use. The proposed electrochemical reactor is capable of being applied even as an alternative for water purification in isolated and disadvantaged regions, since the voltages to be applied are so low that they can be supplied, for example, by solar photovoltaic energy, making it independent of the existence of large electrical installations. Due to its affordable scalability, in the industrial field it has great application potential to comply with the standards established by law in environmental matters, both to reduce water pollution, prior to its discharge, and to make its reuse viable in the industrial process from which it comes or for irrigation water. In the food industry, ceramics, pharmaceuticals and cosmetics, wood, chemicals and plastics, or textiles and footwear, water is generated with high concentrations of very specific chemical pollutants and recalcitrant to conventional water treatments. The invention that is proposed guarantees the obtaining of safe wastewater, both for its discharge and for its reuse and reintroduction into the productive system, which implies an economic saving by reducing both the water consumption and the canons of volume of discharged water.

More particularly, the reactor device for treating water comprising at least one electrochemical cell with a first part, which comprises a first cavity with at least one inner channel, where the inner channel has a path with at least one backwater chamber for water flow. And it is said hydrodynamic inner channel through which the water to be treated circulates, presenting an optimized hydrodynamic design that consists of a zigzag path from the entrance to the exit thereof. And it is specifically the first part of the electrochemical cell that comprises at least one inner channel, including a water inlet hole and an outlet hole at the ends of the geometry designed to circulate the flow. It is noted that there is the possibility of arranging as many electrochemical cells placed in series as required depending on the degree of contamination and the volume of water to be treated, so that it is possible to increase the volume of purified water. It is noted that the term electrochemical cell also encompasses what would be a photo-electrochemical cell, such as a particular case of the electrochemical cell, with specific features.

Consequently, the invention allows the chemical contaminant mineralization and pathogenic microorganism inactivation to be achieved simultaneously, being suitable both for water disinfection and for the reuse of wastewater in irrigation systems and in the industrial processes in which they are generated. In addition, since it is an open system, the volume of water to be purified is variable based on needs.

It is worth mentioning at this point the advantages associated with the electro-oxidation of water in the chemical contaminant degradation and pathogenic microorganism inactivation through direct electrolysis reactions or by the oxidation of oxidizing radicals generated in water: Easily biodegradable low molecular weight compounds, low toxicity, complete mineralization to CO₂ and H₂O, and pathogen inactivation by cell damage are obtained. Improving the efficiency of these processes makes it possible to reduce the high cost of electrochemical treatment.

Preferably, the reactor device for treating water comprises a plurality of backwater chambers for water flow, located along the inner channel path of the first part. Specifically, as many backwater chambers as the zigzag hydraulic path length and the cell dimensions allow can be placed in series, so that a higher level of water purification is achieved for the same passage through the reactor device.

More specifically, the inner channel has a first section, and the at least one backwater chamber has in at least one point of its length a second section, the second section length being greater than the first section. The first section initiates an expanding inlet channel and the second section initiates an outlet channel with a shrinking section. The first section and the second section are ordered according to the direction of advance of the water flow through the path. In this way, a hydrodynamic optimization of the inner channel design of the electrochemical cell is achieved, which has been achieved through numerical simulations using the CFD technique (Computational Fluid Dynamics) and through experimental tests on prototypes.

According to a preferred embodiment of the invention, the at least one backwater chamber has a first segment of its length in the form of a divergent nozzle, joined to a second segment of its length in the form of a convergent nozzle, which allows a) increasing the contact area between the water to be treated and the photocatalytic material, and therefore to optimize the contact time between them; b) doing the above without liquid stream separation, which allows a liquid flow control inside the cell and therefore, reaction degree control, in addition to reducing costs in treating water by optionally, the simultaneous light radiation application.

More in detail, the divergent nozzle comprises an increasing expansion, with an angle between 5° and 30°, from a first section of the inner channel to a second section. The specific shape of the widening prevents the flow separation and therefore, recirculation thereof within the backwater chambers, which would not allow the water purification degree control and therefore would negatively affect the water treatment efficiency.

It is worth mentioning that the second section is maximum at the transition point from the divergent nozzle shape to the convergent nozzle shape, being determined experimentally, and by numerical simulations, as a design that improves water treatment efficiency.

According to another aspect of the invention, the inner channel comprises a electrochemical cell cathode, in view of greater efficiency in water treatment. It should be noted at this point that the electron transfer in the total current density, due to the singular cathode arrangement with respect to the anodic surface, favors the electric current to obtain higher speeds in redox reactions. On the other hand, the residence time optimization of treated water in the cell cavity reduces the electrode deterioration in addition to uniformizing the degree of water purification, which is especially relevant in pathogen inactivation processes to avoid the development of microbial resistance to treatment.

Optionally, the cathode is a metal tape placed on at least one inner channel wall, at least partially following the path geometry, such that the treated water volume is maximized. It is noted that the metal tape is preferably adhered to the inner walls of the hydrodynamic inner channel.

Complementarily, the electrochemical cell comprises an anode in a second part arranged below the first part with at least one inner channel, so that an electrochemical potential difference is established, which causes the transfer of charged particles from one point to another.

Additionally, the second part covers the at least one inner channel of the first part, so that the inner channel has just been formed, and the path through which the water to be treated must circulate without causing unwanted leaks or filtrate.

According to another aspect of the invention, the reactor device for treating water comprises LED lighting means of the first cavity through a second cavity inside a housing, so that a simultaneous application of LED lighting with the external electrical potential occurs. It is noted that this regard that the interaction of LED radiation affects the photocatalyst surface of anode through the solution. Thus, the cathode arrangement with respect to the photo-anode guarantees the separation of the charges generated in the photocatalysis, increasing the oxidizing radical concentration with lower voltage application. On the other hand, the residence time optimization of treated water in the cell cavity reduces the cathode and anode electrode deterioration, in addition to uniformizing the degree of water purification, which is especially relevant in pathogen inactivation processes to avoid the development of microbial resistance to treatment. Thus, the use of LED lighting systems multiplies by up to a factor of ten the useful life time of the electrodes compared to other devices known in the state of the art.

Complementarily, the housing comprises first means for closing the second cavity on its upper side, where the first closing means comprise means for dissipating heat from the LED lighting means, so that said means can act for a longer time and at a greater intensity, without harming other elements of the system. Optionally the heat dissipation means is a heat dissipating plate.

According to a preferred embodiment of the invention, the housing comprises second means for closing the second cavity on its lower side, where the second closing means comprise at least one quartz lid, where the quartz lid allows the passage of light from the LED lighting means. In this way, a watertight channel is formed, which prevents leaks and losses of the water under treatment, while making it possible to apply LED lighting means.

In addition, the reactor device for treating water comprises an electrical power supply connected to the cathode and/or anode and/or to the LED lighting means, enabling its simultaneous function to carry out water treatment by photo electro-oxidation that allows the chemical contaminant mineralization and pathogenic microorganism inactivation to be achieved simultaneously. In particular, the electrical power supply is direct current, and is connected to the charge collector of the electrodes to obtain the desired charge transfer.

Preferably, the second cavity inside the housing of the electrochemical cell comprises a light-reflective coating, so that the light emitted by the LED lighting means repeatedly, and therefore more efficiently, hits the water to be treated.

On the other hand, the second cavity inside the electrochemical cell housing comprises at least one ventilation hole, which allows better heat evacuation, and better function of the electrical and lighting components.

In a preferred embodiment of the invention, the electrochemical cell comprises at least one first seal above the first part and/or at least one second seal below the first part, said first or second seal preferably being of an elastomeric material. These gaskets allow to guarantee the system tightness, by also following the shape of the inner channel distributing water flow.

Complementarily, the electrochemical cell comprises third closing means on its lower side with adjustable leveling means, so that it is possible to tilt the reactor, so that the bubbles rise to the exit point of treated water, this being the O₂ and H₂ bubble accumulation on the electrode surface, a common problem. Thus, the proposed invention promotes its elimination in a simple way.

Additionally, the electrochemical cell comprises means for joining the housing with the first seal and/or with the first part and/or with the second seal and/or with the second part and/or with the third closing means, in order to form a compact assembly, without clearance or backlash.

It is also an object of the present invention a system for treating water comprising at least one feed tank with contaminated water in connection with at least one water driving pump, in connection with at least one reactor device as described above, in connection with at least one storage tank with purified water.

In the accompanying drawings there is shown, by way of non-limiting example, a reactor device for treating water constituted according to the invention. Other characteristics and advantages of said reactor device for treating water, object of the present invention, will be evident from the description of a preferred, but not exclusive, embodiment, which is illustrated by way of non-limiting example in the accompanying drawings.

### BRIEF DESCRIPTION OF THE DRAWINGS

Figure 1- General perspective view of the reactor device for treating water and the elements to which it is connected, according to the present invention;
Figure 2- Detailed view of reactor device for treating water, according to the present invention;
Figure 3- Exploded view of the elements that make up the reactor device for treating water, according to the present invention;
Figure 4- Detailed view of the first part that make up the inner channel of the reactor device for treating water, according to the present invention;
Figure 5- Detailed view of the inner channel and backwater chamber of reactor device for treating water, according to the present invention;
Figure 6- Detailed view of the reactor device cathode for treating water, according to the present invention;
Figure 7- Detailed view of the reactor device anode for treating water, according to the present invention;
Figure 8- Detailed view of a reactor device gasket for treating water, according to the present invention;

### DESCRIPTION OF A PREFERRED EMBODIMENT

In view of the aforementioned figures and, according to the numbering adopted, a preferred embodiment of the invention can be seen therein, comprising the parts and elements indicated and described in detail below.

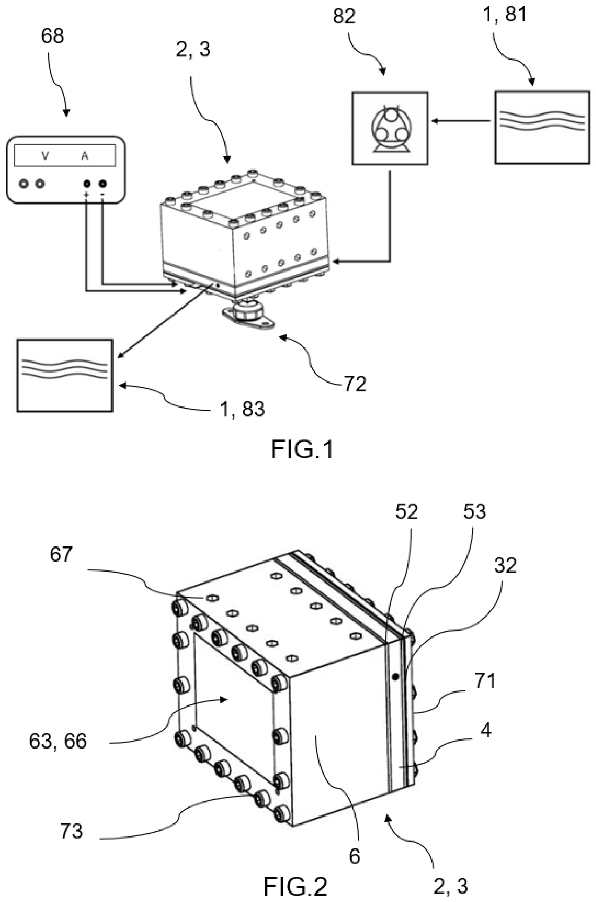

In Figure 1, a general perspective view of the reactor device (2) for treating water (1) and the elements to which it is connected can be seen, including a feed tank (81) with the water (1) to be treated, which is driven by a drive pump (82) towards said reactor (2) with an electrochemical cell (3), supported on the ground with levelling means (72), and connected to an electrical power supply (68) as a power supply, finally leaving the treated water (1) towards a storage tank (83).

In Figure 2, a detailed view of the reactor device (2) for treating water (1) and in particular the electrochemical cell (3) can be seen, in which the position of the anode (32) can be seen, attached to a first part (4), attached to a first gasket (52) and a second gasket (53), on one side of the housing (6), and inside a second cavity (63) including a reflective coating (66), and in its walls at least one ventilation hole (67). On both sides it has third closing means (71) and joining means (73).

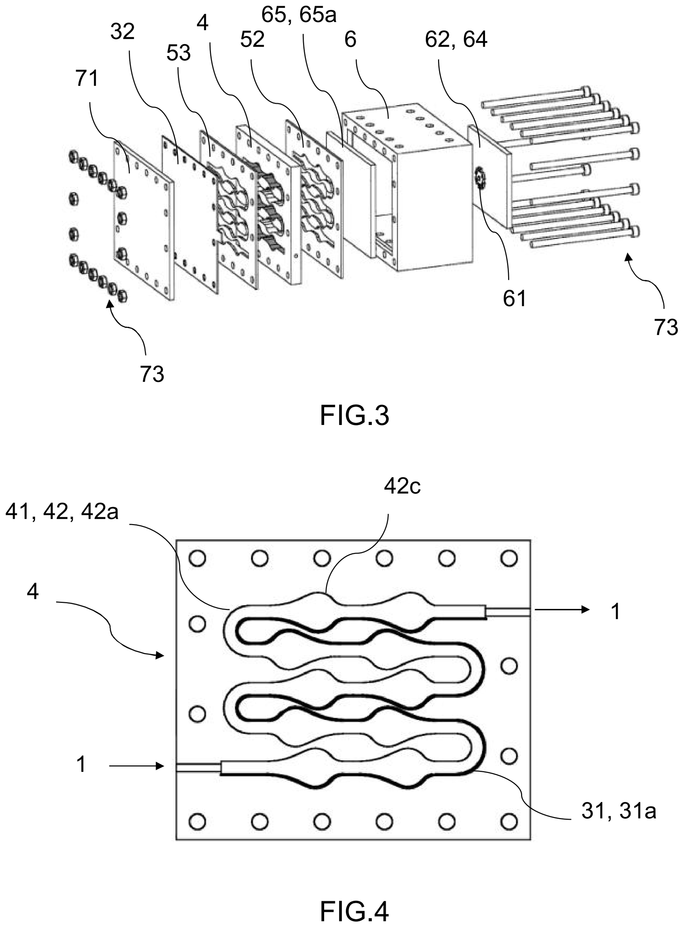

In Figure 3 it can be seen an exploded view of the elements that make up the reactor device (2) for treating water (1). On one side, the housing (6) can be seen with the lighting means (61) and the dissipation means (62), and on both sides of the second cavity (63) it has the first closing means (64) and the second closing means (65), in particular a quartz lid (65a). Next, the first part (4) is seen flanked with a first gasket (52) and a second gasket (53). Finally, an anode (32) is located with a third closing means (71), held by the joining means (73).

In Figure 4 it can be seen a detailed view of the first part (4) forming the inner channel (42) of the reactor device (2) for treating water (1), which includes a first cavity (41) with a plurality of backwater chambers (42c) along the path (42a). The position of the cathode (31), which consists of a metal tape (31a), is also appreciated.

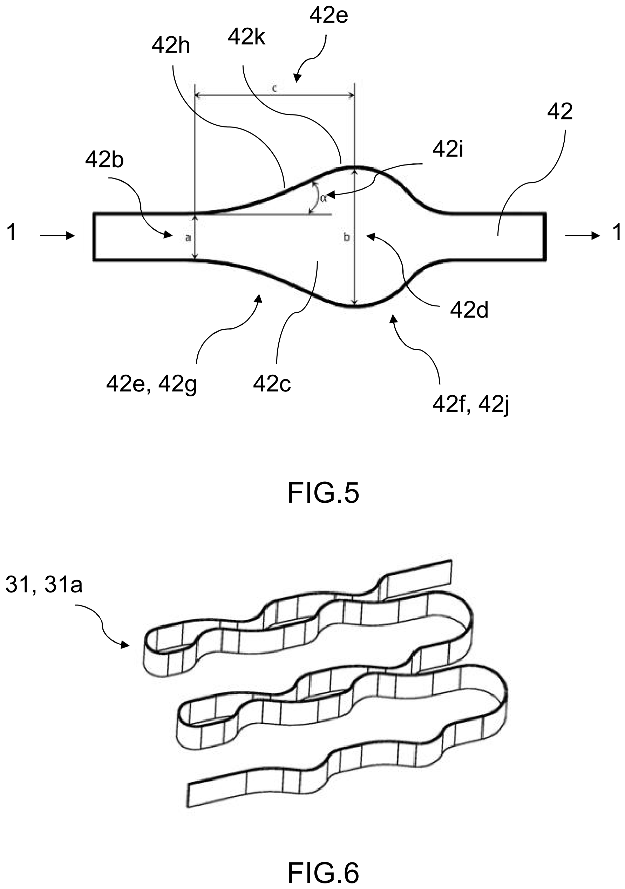

In Figure 5 it can be seen a detailed view of the inner channel (42) and backwater chamber (42c) of the reactor device (2) for treating water (1). It is seen that the first section (42e) begins with a first section (42b), and from the transition point (42k), a second section (42f) begins that reaches a greater amplitude until reaching a second section (42d). In the case of the first section (42e) there is a divergent nozzle (42g) with an expansion (42h) through an angle (42i), while in the second section (42f) there is a convergent nozzle (42j) until reaching the value of the first section (42b) again.

In Figure 6 it can be seen a detailed view of the cathode (31) of the reactor device (2) for treating water (1), integrated by a metal belt (31a).

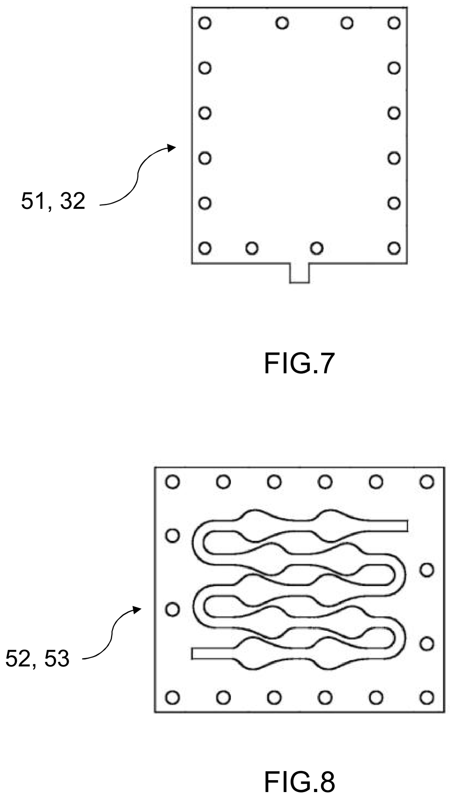

In Figure 7 it can be seen a detailed view of the anode (32) as a second part (51) of the reactor device (2) for treating water (1).

In Figure 8 it can be seen a detailed view of a gasket of the reactor device (2) for treating water (1), which can represent either a first gasket (52) or a second gasket (53).

More particularly, as seen in Figures 3 and 4, the reactor device (2) for treating water (1) comprises at least one electrochemical cell (3) with a first part (4) comprising a first cavity (41) with at least one inner channel (42), where the inner channel (42) has a path (42a) with at least one backwater chamber (42c) for water flow (1).

Preferably, as seen in Figures 3 and 4, the reactor device (2) for treating water (1) comprises a plurality of backwater chambers (42c) for water flow (1), located along the path (42a) of the inner channel (42) of first part (4).

More specifically, as seen in Figures 4 and 5, the inner channel (42) has a first section (42b), and the at least one backwater chamber (42c) has in at least one point of its length a second section (42d), the second section (42d) length being greater than the first section (42b).

In a preferred embodiment of the invention, as seen in Figures 4 and 5, the at least one backwater chamber (42c) has a first segment (42e) of its length in the form of a divergent nozzle (42g), joined to a second segment (42f) of its length in the form of a convergent nozzle (42j).

More in detail, as seen in figure 5, the divergent nozzle (42g) comprises an increasing expansion (42h), with an angle (42i) of between 5° and 30°, from a first section (42b) of the inner channel (42) to a second section (42d), so that the backwater chambers (42c) have a specially designed shape so that there is no flow separation.

More specifically, as seen in Figure 5, the second section (42d) is maximum at the transition point (42k) from the divergent nozzle shape (42g) to the convergent nozzle shape (42j). Thus the water (1) to be treated passes from an area with a first section (42b) to another second section (42d), its expansion ratio having the value of γ =b/a ≥2. The smaller the angle α (42i), the greater the water flow rate (1) that the electrochemical cell (3) can treat without having current release problems, although the greater the necessary length c of the first section (42e) for a given expansion ratio (42h), where the value of c is assimilated to the value of b/2tan α. Add that the recommended range for the angle (42i), following the general design recommendations of flow expansions is 5°≤ α ≤30°. For smaller values of the angle (42i), the first segment (42e) length would be too large. For higher values there is a risk of flow separation. And specify that the divergent nozzle (42g) is coupled tangentially with the convergent nozzle (42j) to return to the width of the inner channel (42), the second section (42f) of a length being equal to or shorter than the first section (42e) of the divergent nozzle (42g), since the angle of contraction can be equal to or less than that of the expansion (42h), without there being a danger of flow detachment in this way, and without significantly increasing pressure losses along the inner channel (42).

Optionally, as seen in Figures 4 and 6, the inner channel (42) comprises a cathode (31) of the electrochemical cell (3).

More specifically, as seen in Figures 4 and 6, the cathode (31) is a metal tape (31a) placed on at least one wall of the inner channel (42), at least partially following the geometry of the path (42a). It is noted that the metal tape is preferably made of stainless steel, e.g. AISI 316, and that it is adhered to the inner walls of the hydrodynamic inner channel (42).

On the other hand, as seen in figure 7, the electrochemical cell (3) comprises an anode (32) in a second part (51) arranged below the first part (4) with at least one inner channel (42).

Additionally, as seen in Figures 4 and 7, the second part (51) covers the at least one inner channel (42) of the first part (4). And specifically, the second part (51) is a metal sheet that supports the photocatalyst material whose thickness can vary in an optimal range of 0.5 to 2 mm.

According to another aspect of the invention, as seen in Figure 3, the reactor device (2) for treating water (1) comprises LED lighting means (61) of the first cavity (41) through a second cavity (63) inside a housing (6), where the LED lighting means (61) have their own driver or controller. It should be noted that the LED lighting means (61) have the option of applying three different wavelengths, which can be 275, 365 or 385 nm, depending on the degree of water pollution, which allows to reduce costs depending on the absorbance of the medium. This type of luminaire, in addition to having a longer useful life than the lamps traditionally used, and if they are not polluting, they take advantage of 90% of the energy to generate radiation.

Preferably, as seen in Figure 3, the housing (6) comprises first closing means (64) of the second cavity (63) on its upper side, where the first closing means (64) comprise heat dissipation means (62) of the LED lighting means (61).

According to another aspect of the invention, as seen in Figure 3, the housing (6) comprises second closing means (65) for closing the second cavity (63) on its lower side, where the second closing means (65) comprise at least one quartz lid (65a).

In addition, as seen in Figure 1, the reactor device (2) for treating water (1) comprises an electrical power supply (68) connected to the cathode (31) and/or to the anode (32) and/or to the LED lighting means (61).

Additionally, as seen in Figure 2, the second cavity (63) inside the housing (6) of the electrochemical cell (3) comprises a light-reflective coating (66).

On the other hand, as seen in Figure 2, the second cavity (63) inside the housing (6) of the electrochemical cell (3) comprises at least one ventilation hole (67).

Additionally, as seen in Figures 2 and 3, the electrochemical cell (3) comprises at least one first seal (52) above the first part (4) and/or at least one second seal (53) below the first part (4).

Preferably, as seen in Figures 1 and 3, the electrochemical cell (3) comprises third closing means (71) on its lower side with adjustable leveling means (72), in order to reach a preferably horizontal position.

According to a preferred embodiment of the invention, as seen in Figures 2 and 3, the electrochemical cell (3) comprises joining means (73) for the housing (6) with the first seal (52) and/or with the first part (4) and/or with the second seal (53) and/or with the second part (51) and/or with the third closing means (71). It is required that the joining means (73) comprise nuts and/or tightening screws. It is noted that the electrochemical cell (3), and in particular the housing (6) and different parts can be manufactured using the 3D printing technique.

It is also an object of the present invention, as seen in Figure 1, a system for treating water (1) comprising at least one feed tank (81) with contaminated water (1) in connection with at least one drive pump (82) of water (1), in connection with at least one reactor device (2) in connection with at least one storage tank (83) with purified water (1).

The details, shapes, dimensions and other accessory elements, as well as the components used in the implementation of the reactor device (2) for treating water (1), may be conveniently replaced by others that are technically equivalent, and do not depart from the essence of the invention or the scope defined by the claims included below in the following list.

### List of numerical references:

- 1: water
- 2: reactor

- 3: electrochemical cell
- 31: cathode
- 31a: metal tape
- 32: anode
- 4: first part
- 41: first cavity
- 42: inner channel
- 42a: path
- 42b: first section
- 42c: backwater chamber
- 42d: second section
- 42e: first segment
- 42f: second segment
- 42g: diverging nozzle
- 42h: expansion
- 42i: angle
- 42j: converging nozzle
- 42k: transition point
- 51: second part
- 52: first gasket
- 53: second gasket
- 6: housing
- 61: lighting means
- 62: dissipation means
- 63: second cavity
- 64: first closing means
- 65: second closing means
- 65a: quartz lid
- 66: reflective coating
- 67: ventilation hole
- 68: electrical power supply
- 71: third closing means
- 72: levelling means
- 73: joining means
- 81: feed tank
- 82: impeller pump
- 83: storage tank

## Claims

1. Reactor device (2) for treating water (1) comprising at least one electrochemical cell (3) with a first part (4) comprising a first cavity (41) with at least one inner channel (42), **characterized in that** the inner channel (42) has a path (42a) with at least one backwater chamber (42c) for water flow (1).

2. Reactor device (2) for treating water (1) according to claim 1, **characterized in that** it comprises a plurality of backwater chambers (42c) for water flow (1), located along the path (42a) of the inner channel (42) of first part (4).

3. Reactor device (2) for treating water (1) according to any of the preceding claims, **characterized in that** the inner channel (42) has a first section (42b), and the at least one backwater chamber (42c) has in at least one point of its length a second section (42d), the second section (42d) length being greater than the first section (42b).

4. Reactor device (2) for treating water (1) according to claim 3, **characterized in that** the at least one backwater chamber (42c) has a first segment (42e) of its length in the form of a divergent nozzle (42g), joined to a second segment (42f) of its length in the form of a convergent nozzle (42j).

5. Reactor device (2) for treating water (1), according to claim 4, **characterized in that** the divergent nozzle (42g) comprises an increasing expansion (42h), with an angle (42i) between 5° and 30°, from a first section (42b) of the inner channel (42) to a second section (42d).

6. Reactor device (2) for treating water (1), according to claim 5, **characterized in that** the second section (42d) is maximum at the transition point (42k) from the divergent nozzle shape (42g) to the convergent nozzle shape (42j).

7. Reactor device (2) for treating water (1) according to any of the preceding claims, **characterized in that** the inner channel (42) comprises a cathode (31) of the electrochemical cell (3).

8. Reactor device (2) for treating water (1) according to claim 7, **characterized in that** the cathode (31) is a metal tape (31a) placed on at least one wall of the inner channel (42), at least partially following the geometry of the path (42a).

9. Reactor device (2) for treating water (1) according to any of the preceding claims, **characterized in that** the electrochemical cell (3) comprises an anode (32) in a second part (51) arranged below the first part (4) with at least one inner channel (42).

10. Reactor device (2) for treating water (1) according to claim 9, **characterized in that** the second part (51) covers the at least one inner channel (42) of the first part (4).

11. Reactor device (2) for treating water (1) according to any of the preceding claims, **characterized in that** it comprises LED lighting means (61) of the first cavity (41) through a second cavity (63) inside a housing (6).

12. Reactor device (2) for treating water (1), according to claim 11, **characterized in that** the housing (6) comprises first closing means (64) of the second cavity (63) on its upper side, where the first closing means (64) comprise heat dissipation means (62) of the LED lighting means (61).

13. Reactor device (2) for treating water (1), according to claim 12, **characterized in that** the housing (6) comprises second closing means (65) for closing the second cavity (63) on its lower side, where the second closing means (65) comprise at least one quartz lid (65a).

14. Reactor device (2) for treating water (1), according to claims 7, 9 and 11, **characterised in that** it comprises an electrical power supply (68) connected to the cathode (31) and/or anode (32) and/or to the LED lighting means (61).

15. Reactor device (2) for treating water (1) according to claim 11, **characterized in that** the second cavity (63) inside the housing (6) of the electrochemical cell (3) comprises a light-reflective coating (66).

16. Reactor device (2) for treating water (1) according to claim 11, **characterized in that** the second cavity (63) inside the housing (6) of the electrochemical cell (3) comprises at least one ventilation hole (67).

17. Reactor device (2) for treating water (1) according to any of the preceding claims, **characterized in that** the electrochemical cell (3) comprises at least one first gasket (52) above the first part (4) and/or at least one second gasket (53) below the first part (4).

18. Reactor device (2) for treating water (1) according to any of the preceding claims, **characterized in that** the electrochemical cell (3) comprises third closing means (71) on its lower side with adjustable leveling means (72).

19. Reactor device (2) for treating water (1) according to claims 9, 11, 17 and 18, **characterized in that** the electrochemical cell (3) comprises joining means (73) for the housing (6) with the first seal (52) and/or with the first part (4) and/or with the second seal (53) and/or with the second part (51) and/or with the third closing means (71).

20. System for treating water (1) comprising at least one feed tank (81) with contaminated water (1) in connection with at least one impeller pump (82) of water (1), in connection with at least one reactor device (2) according to any of the preceding claims, in connection with at least one storage tank (83) with purified water (1).
